# EUROPEAN PATENT APPLICATION

(11) **EP 4 050 959 A1**
(43) Date of publication of application: **31.08.2022**
(21) Application number: 20883690.8
(22) Date of filing: 03.11.2020
(51) Int. Cl.: H04W 74/00, H04W 74/08, H04W 76/18, H04W 76/19

(54) **BEAM FAILURE RECOVERY CONFIRMING METHOD, TERMINAL DEVICE, AND STORAGE MEDIUM**

(30) Priority: 07.11.2019 CN 201911083599
(71) Applicant: Vivo Mobile Communication Co., Ltd., Dongguan, Guangdong 523863 (CN)
(72) Inventor: CHEN, Xiaohang, Dongguan, Guangdong 523863 (CN); SUN, Peng, Dongguan, Guangdong 523863 (CN); WU, Yumin, Dongguan, Guangdong 523863 (CN)
(74) Representative: Petraz, Gilberto Luigi
(86) International application number: PCT/CN2020/126111
(87) International publication number: WO 2021/088791

(57) **Abstract**

Embodiments of the present invention disclose a method for determining beam failure recovery, a terminal device, and a storage medium, and relate to the field of communications technologies. The method includes: in a case of a beam failure, initiating a contention-based random access process triggered for beam failure recovery; and receiving a downlink response message and determining that the beam failure recovery is completed, where the downlink response message is a response message corresponding to the random access process.

## Description

### TECHNICAL FIELD

Embodiments of the present disclosure relate to the field of communications technologies, and in particular, to a method for determining beam failure recovery, a terminal device, and a storage medium.

### BACKGROUND

In a high-band communications system, because a wavelength of a wireless signal is relatively short, propagation of the wireless signal is easily blocked, and consequently propagation of the wireless signal is interrupted, that is, a beam failure occurs. To ensure that the wireless signal continues to be transmitted, a beam failure recovery (BFR) mechanism can be implemented to recover wireless signal transmission.

However, because completion of a beam failure recovery process is not specifically defined, a terminal device may not be able to complete the BFR, which has a negative impact on transmission of a wireless signal.

### SUMMARY

Embodiments of the present disclosure provide a method for determining beam failure recovery, a terminal device, and a storage medium, to resolve the problem of negative impact on signal transmission.

To resolve the foregoing technical problem, the present disclosure is implemented as follows:

According to a first aspect, an embodiment of the present disclosure provides a method for determining beam failure recovery, applied to a terminal device. The method includes: in a case of a beam failure, initiating a contention-based random access process triggered for beam failure recovery; and receiving a downlink response message and determining that the beam failure recovery is completed, where the downlink response message is a response message corresponding to the random access process.

According to a second aspect, an embodiment of the present disclosure provides a terminal device, including: an access initiation module, configured to: in a case of a beam failure, initiate a contention-based random access process triggered for beam failure recovery; and a receiving module, configured to receive a downlink response message and determine that the beam failure recovery is completed, where the downlink response message is a response message corresponding to the random access process.

According to a third aspect, an embodiment of the present disclosure provides a terminal device, including a processor, a memory, and a computer program stored in the memory and executable on the processor, where when the computer program is executed by the processor, the steps in the method for determining beam failure recovery in the technical solution of the first aspect are implemented.

According to a fourth aspect, an embodiment of the present disclosure provides a computer-readable storage medium, where the computer-readable storage medium stores a computer program, and when the computer program is executed by a processor, the steps in the method for determining beam failure recovery in the technical solution of the first aspect are implemented.

In the embodiments of the present disclosure, in a case of a beam failure, the terminal device may initiate a contention-based random access process triggered for beam failure recovery. The terminal device receives the downlink response message indicating a response to a random access message, and determines that the BFR is completed, that is, determines that the BFR ends. In this way, completion of the BFR can be determined, thereby avoiding that the UE cannot complete the BFR. This avoids negative impact on signal transmission between the terminal device and a network device, and improves signal transmission between the terminal device and a network device.

### BRIEF DESCRIPTION OF DRAWINGS

The present disclosure may be better understood based on the following description of specific implementations of the present disclosure with reference to the accompanying drawings. The same or similar reference numerals indicate same or similar features.
FIG. 1 is a flowchart of a method for determining beam failure recovery according to an embodiment of the present disclosure;
FIG. 2 is a schematic structural diagram of a terminal device according to an embodiment of the present disclosure; and
FIG. 3 is a schematic structural diagram of hardware of a terminal device according to embodiments of the present disclosure.

### DETAILED DESCRIPTION OF EMBODIMENTS

The following clearly and completely describes the technical solutions in the embodiments of this disclosure with reference to the accompanying drawings in the embodiments of this disclosure. Apparently, the described embodiments are some rather than all of the embodiments of this disclosure. All other embodiments acquired by a person of ordinary skill in the art based on the embodiments of the present disclosure without creative efforts shall fall within the protection scope of the present disclosure.

The embodiments of the present disclosure provide a method for determining beam failure recovery, a terminal device, and a storage medium, which can be applied to a scenario in which a terminal device such as user equipment (User Equipment, UE) has a beam failure, and beam failure recovery (Beam Failure Recovery, BFR) is initiated through contention-based random access. The terminal device may specifically be a device with a communication function, such as a mobile phone, a computer, a tablet computer, and a smart home appliance. This is not limited herein. The network device may specifically be a device such as a base station. This is not limited herein.

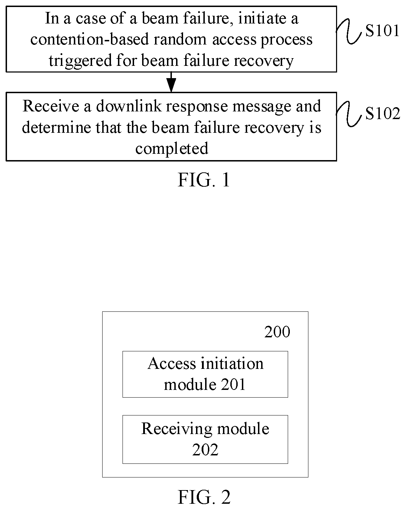

FIG. 1 is a flowchart of a method for determining beam failure recovery according to an embodiment of the present disclosure. The method for determining beam failure recovery may be applied to a terminal device. As shown in FIG. 1, the method for determining beam failure recovery may include step S101 and step S102.

Step S101: In a case of a beam failure, initiate a contention-based random access process triggered for beam failure recovery.

In a case of a failure, the beam terminal device may initiate a contention-based random access process. The random access process is used for beam failure recovery.

The beam failure may specifically occur in a primary cell (Primary Cell, PCell) or in a secondary cell (Secondary Cell, SCell). This is not limited herein.

When the beam failure occurs in a PCell, that is, the PCell has the beam failure, a contention-based random access process may be initiated in the PCell.

When the beam failure occurs in the SCell, that is, the SCell has the beam failure, the random access process may include sending a message 3 (msg3), where the msg3 includes a beam failure recovery medium access control control element (Beam Failure Recovery Medium Access Control Control Element, BFR MAC CE). The BFR process of the SCell can be initiated through the MAC CE included in the msg3. Alternatively, the random access process can include sending a message A (msgA), where the msgA includes a BFR MAC CE. The BFR process of the SCell can be initiated through the MAC CE of the msgA.

Specifically, the terminal device may send a random access message for initiating the contention-based random access process triggered by the BFR, to initiate the contention-based random access process triggered by the BFR. That is, the contention-based random access process triggered for beam failure recovery in step S101 can be specifically: sending a random access message.

In some examples, the contention-based random access message may include a random access message corresponding to a 4-step random access process. In some other examples, the contention-based random access message may include a random access message corresponding to a 2-step random access process.

In step S102, the downlink response message is received, and it is determined that the beam failure recovery is completed.

The downlink response message is a response message corresponding to the random access process. The terminal device receives the downlink response message, and determines that the random access process is completed. Therefore, it can be determined that the beam failure recovery is completed. Specifically, the downlink response message may include a random access response message corresponding to the random access process. The random access response message may be a response message of the random access message.

If the terminal device successfully receives the downlink response message, the terminal device can determine that the BFR is completed, that is, the terminal device can determine the BFR is finished.

Corresponding to the random access message, in some examples, the downlink response message may include a random access response message corresponding to the 4-step random access process. In some other examples, the downlink response message may include a random access response message corresponding to a 2-step random access process.

In the embodiments of the present disclosure, in a case of a beam failure, the terminal device may initiate a contention-based random access process triggered for beam failure recovery. The terminal device receives the downlink response message indicating a response to a random access message, and determines that the BFR is completed, that is, determines that the BFR ends. In this way, completion of the BFR can be determined, thereby avoiding that the UE cannot complete the BFR. This avoids negative impact on signal transmission between the terminal device and a network device, and improves signal transmission between the terminal device and a network device.

In some embodiments, when the random access process is a 4-step random access process, the random access message may include a message 1 (msgl) in the 4-step random access process or a message 3 (msg3) in the 4-step random access process. Correspondingly, the downlink response message may include a message 4 (msg4) in the 4-step random access process.

The msgl may include a physical random access channel (Physical Random Access Channel, PRACH). The msg3 may include a physical uplink shared channel (PUSCH) scheduled by a random access response (RAR).

In some examples, the msg4 may include one or more of the following:
1. a physical downlink control channel (Physical downlink control channel, PDCCH) scrambled by a cell-radio network temporary identifier (Cell-Radio Network Temporary Identifier, C-RNTI), where the PDCCH carries an uplink grant (Uplink grant, UL grant); and the PDCCH is used to schedule a new transmission;
2. a PDCCH scrambled by a C-RNTI, where the PDCCH carries an uplink grant, the uplink grant indicates a hybrid automatic repeat request (Hybrid automatic repeat request, HARQ) process number that is the same as a HARQ process number for transmission of a msg3, and the PDCCH is used to schedule a new transmission; and
3. a PDCCH scrambled by a C-RNTI and received in a common search space (Common Search Space, CSS) or a user equipment-specific search space (User Equipment Specific Search Space, USS).

In some examples, the msg4 is received before a contention resolution timer (that is, contention resolution timer) expires.

Whether the msg4 is received before the contention resolution timer expires and content that can be included in the msg4 can be comprehensively considered. This is not limited herein.

When the BFR is triggered in the PCell, if the terminal device successfully receives the msg4 in the 4-step random access process, this means that the terminal device has completed the random access process triggered by the BFR.

When the BFR is triggered in the SCell, if the terminal device successfully receives the msg4 in the 4-step random access process and uses the msg4 as a success response of the BFR of the SCell initiated on the MAC CE of the msg3, this means that the terminal device has completed the BFR.

For ease of description, the following uses several examples to describe the method for determining beam failure recovery when the random access process is a 4-step random access process.

### First example A1:

If the terminal device such as UE initiates a contention-based 4-step random access process triggered by the BFR in a Pcell, and before a contention resolution timer expires, the UE receives a PDCCH scrambled by a C-RNTI, where the PDCCH is detected in a CSS or a USS, the UE determines that the contention-based 4-step random access process triggered by the BFR is successfully completed, that is, determines that the BFR is completed.

### Second example A2:

If a terminal device such as UE initiates a contention-based 4-step random access process triggered by the BFR in the SCell, and the UE receives a msg4 of the 4-step random access process before a contention resolution timer expires, the UE determines that the 4-step random access process triggered by the BFR is successfully completed, or the UE successfully responds to a message related to the BFR of the SCell carried by the MAC CE of the msg3 of the 4-step random access process. For specific content of the received msg4, refer to the description in the foregoing embodiment, and details are not repeated herein.

In some other embodiments, when the random access process is a 2-step random access process, the random access message may include a message A (msgA) in the 2-step random access process. Correspondingly, the downlink response message may include a message B (msgB) in the 2-step random access process.

The msgA may include a PRACH and a PUSCH.

In some examples, the msgB includes one or more of the following:
1. a PDCCH scrambled by a C-RNTI, where the PDCCH carries an uplink grant; and the PDCCH is used to schedule a new transmission;
2. a PDCCH scrambled by a C-RNTI, where the PDCCH carries an uplink grant, the uplink grant indicates a hybrid automatic repeat request (HARQ) process number that is the same as a HARQ process number for transmission of the msgA; the PDCCH is used to schedule a new transmission, and the process number can be defined as 0 and is not limited herein;
3. a PDCCH scrambled by a C-RNTI and a PDSCH scheduled by the PDCCH; and
4. a PDCCH scrambled by a C-RNTI and received in a CSS or a USS.

When the msgB includes the PDCCH scrambled by the C-RNTI and the PDSCH corresponding to the PDCCH and scheduled by the PDCCH, the PDSCH is scheduled by a downlink grant (Downlink grant, DL grant) carried by the PDCCH, and/or the PDSCH includes a timing advance command (Timing Advance command, TA command).

In some examples, the msgB is received before a msgB timer expires.

Whether the msgB is received before the msgB timer expires and content that can be included in the msgB can be comprehensively considered. This is not limited herein.

When the BFR is triggered in the PCell, if the terminal device successfully receives the msg4 in the 4-step random access process, this means that the terminal device has completed the random access process triggered by the BFR.

When the BFR is triggered in the SCell, if the terminal device successfully receives the msg4 in the 4-step random access process and uses the msg4 as a success response of the BFR of the SCell initiated on the MAC CE of the msg3, this means that the terminal device has completed the BFR.

In some cases, the random access process initiated by the terminal device may fall back from a 2-step random access process to a 4-step random access process, and correspondingly, the downlink response message includes a msg4 in the 4-step random access process.

For ease of description, the following uses several examples to describe the method for determining beam failure recovery when the random access process is a 2-step random access process.

### First example B1:

If the terminal device such as UE initiates a contention-based 2-step random access process triggered by the BFR in a Pcell, and before a msgB timer expires, the UE receives a PDCCH scrambled by a C-RNTI, where the PDCCH is detected in a CSS or a USS, the UE determines that the contention-based 2-step random access process triggered by the BFR is successfully completed, that is, determines that the BFR is completed.

### Second example B2:

If the terminal device such as UE initiates a contention-based 2-step random access process triggered by the BFR in a Pcell, and before a msgB timer expires, the UE receives a PDCCH scrambled by a C-RNTI, where the PDCCH is detected in a CSS or a USS, the UE determines that the contention-based 2-step random access process triggered by the BFR is successfully completed, that is, determines that the BFR is completed.

In some cases, all control resource sets (CORESET) associated with the CSS or the USS and synchronization signal and physical broadcast channel blocks (Synchronization Signal and Physical Broadcast Channel block, SSB) associated with the msgA in the 2-step random access process have the same beam information or are quasi co-located (QCL).

In some other cases, the CSS is a search space corresponding to random access, that is, ra-search space.

It should be noted that, in the random access process, if the random access process initiated by the terminal device falls back to the 4-step random access process, the received downlink response message includes a random access response message such as the msg4 corresponding to the 4-step random access process. The UE receives a PDCCH scrambled by a C-RNTI before the contention resolution timer expires, and the PDCCH is detected in the CSS or the USS. In this case, it is determined that the BFR is completed.

### Third example B3:

If the terminal device such as UE initiates a contention-based 2-step random access process triggered by the BFR in a Pcell, and before a msgB timer expires, the UE receives a PDCCH scrambled by a C-RNTI, where the PDCCH is detected in a CSS, the UE determines that the 2-step random access process triggered by the BFR is successfully completed, that is, determines that the BFR is completed.

In some cases, all CORESETs associated with the CSS and SSBs associated with the msgA of the 2-step random access process have the same beam information or are quasi co-located.

In some other cases, the CSS is a search space corresponding to random access, that is, ra-search space.

In the random access process, if the random access process initiated by the terminal device falls back to the 4-step random access process, the received downlink response message includes a random access response message such as the msg4 corresponding to the 4-step random access process. The UE receives a PDCCH scrambled by a C-RNTI before the contention resolution timer expires, and the PDCCH is detected in the CSS or the USS. In this case, it is determined that the BFR is completed.

### Fourth example B4:

If the terminal device such as UE initiates a contention-based 2-step random access process triggered by the BFR in a Scell, and before a msgB timer expires, the UE receives a PDCCH scrambled by a C-RNTI, where the PDCCH is detected in a CSS or a USS, the UE determines that the contention-based 2-step random access process triggered by the BFR is successfully completed, or the UE successfully responds to a message related to the BFR of the SCell carried by the MAC CE of the msgA of the 2-step random access process, that is, determines that the BFR is completed.

### Fifth example B5:

If the terminal device such as UE initiates a contention-based 2-step random access process triggered by the BFR in a Scell, and before a msgB timer expires, the UE receives a PDCCH scrambled by a C-RNTI, where the PDCCH is detected in a CSS, the UE determines that the contention-based 2-step random access process triggered by the BFR is successfully completed, or the UE successfully responds to a message related to the BFR of the SCell carried by the MAC CE of the msgA of the 2-step random access process, that is, determines that the BFR is completed.

In some cases, the CSS is a search space corresponding to random access, that is, ra-search space.

In the random access process, if the random access process initiated by the terminal device falls back to the 4-step random access process, the received downlink response message includes a random access response message such as the msg4 corresponding to the 4-step random access process. The UE receives a PDCCH scrambled by a C-RNTI before the contention resolution timer expires, and the PDCCH is detected in the CSS or the USS. In this case, it is determined that the BFR is completed.

### Sixth example B6:

If the terminal device such as UE initiates a contention-based 2-step random access process triggered by the BFR in a Scell, and before a msgB timer expires, the UE receives a PDCCH scrambled by a C-RNTI, where the PDCCH is detected in a CSS or a USS, the UE determines that the contention-based 2-step random access process triggered by the BFR is successfully completed, or the UE successfully responds to a message related to the BFR of the SCell carried by the MAC CE of the msgA of the 2-step random access process, that is, determines that the BFR is completed.

In some cases, all CORESETs and SSBs associated with the msgA have the same beam information or are quasi co-located.

In some other cases, all CORESETs associated with the CSS and SSBs associated with the msgA have the same beam information or are quasi co-located.

In some other cases, the CSS is a search space corresponding to random access, that is, ra-search space.

In the random access process, if the random access process initiated by the terminal device falls back to the 4-step random access process, the received downlink response message includes a random access response message such as the msg4 corresponding to the 4-step random access process. The UE receives a PDCCH scrambled by a C-RNTI before the contention resolution timer expires, and the PDCCH is detected in the CSS or the USS. In this case, it is determined that the BFR is completed.

### Seventh example B7:

When the terminal device such as UE is in uplink synchronization and uplink data arrives, if the terminal device such as UE initiates a contention-based 2-step random access process triggered by the BFR in the SCell, and the UE receives a msgB before a msgB timer expires, the UE determines that the contention-based 2-step random access process triggered by the BFR is successfully completed, or the UE successfully responds to a message related to the BFR of the SCell carried by the MAC CE of the msgA of the 2-step random access process, that is, determines that the BFR is completed.

In some cases, the msgB may include the PDCCH scrambled by the C-RNTI, and the PDCCH carries the uplink grant. The PDCCH is used to schedule a new transmission.

Specifically, a HARQ process number of PUSCH transmission of the msgA may be defined as 0. The uplink grant indicates a HARQ process number that is the same as a HARQ process number for the PUSCH transmission of the msgA.

In some other cases, the msgB may include the PDCCH scrambled by the C-RNTI, and the PDCCH carries the uplink grant. The uplink grant is not limited.

### Eighth example B8:

When the terminal device such as UE is in uplink synchronization and no uplink data arrives, if the terminal device such as UE initiates a contention-based 2-step random access process triggered by the BFR in the SCell, and the UE receives a msgB before a msgB timer expires, the UE determines that the contention-based 2-step random access process triggered by the BFR is successfully completed, or the UE successfully responds to a message related to the BFR of the SCell carried by the MAC CE of the msgA of the 2-step random access process, that is, determines that the BFR is completed.

In some cases, the msgB may include the PDCCH scrambled by the C-RNTI, and the PDCCH carries the uplink grant. The PDCCH is used to schedule a new transmission.

Specifically, a HARQ process number of PUSCH transmission of the msgA may be defined as 0. The uplink grant indicates a HARQ process number that is the same as a HARQ process number for the PUSCH transmission of the msgA.

In other cases, the msgB may include the PDCCH scrambled by the C-RNTI and the corresponding PDSCH scheduled by the PDCCH.

Specifically, the PDSCH is scheduled by the downlink grant carried by the PDCCH. The PDSCH includes a TA command.

### Ninth example B9:

When the terminal device such as UE is out-of-uplink synchronization and uplink data arrives, if the terminal device such as UE initiates a contention-based 2-step random access process triggered by the BFR in the SCell, and the UE receives a msgB before a msgB timer expires, the UE determines that the contention-based 2-step random access process triggered by the BFR is successfully completed, or the UE successfully responds to a message related to the BFR of the SCell carried by the MAC CE of the msgA, that is, determines that the BFR is completed.

In some cases, the msgB may include a PDCCH scrambled by a C-RNTI, and the PDCCH carries an uplink grant. The PDCCH is used to schedule a new transmission.

Specifically, a HARQ process number of PUSCH transmission of the msgA may be defined as 0. The uplink grant indicates a HARQ process number that is the same as a HARQ process number for the PUSCH transmission of the msgA.

In other cases, the msgB may include the PDCCH scrambled by the C-RNTI and the corresponding PDSCH scheduled by the PDCCH.

Specifically, the PDSCH is scheduled by the downlink grant carried by the PDCCH. The PDSCH includes a TA command.

Optionally, the msgB may further include a PDCCH scrambled by the C-RNTI and carrying the uplink grant.

### Tenth example B10:

When the terminal device such as UE is out-of-uplink synchronization and no uplink data arrives, if the terminal device such as UE initiates a contention-based 2-step random access process triggered by the BFR in a Scell, and before a msgB timer expires, the UE receives a msgB, the UE determines that the contention-based 2-step random access process triggered by the BFR is successfully completed, or the UE successfully responds to a message related to the BFR of the SCell carried by the MAC CE of the msgA, that is, determines that the BFR is completed.

In some cases, the msgB may include the PDCCH scrambled by the C-RNTI, and the PDCCH carries the uplink grant. The PDCCH is used to schedule a new transmission.

Specifically, a HARQ process number of PUSCH transmission of the msgA may be defined as 0. The uplink grant indicates a HARQ process number that is the same as a HARQ process number for the PUSCH transmission of the msgA.

In other cases, the msgB may include the PDCCH scrambled by the C-RNTI and the corresponding PDSCH scheduled by the PDCCH.

Specifically, the PDSCH is scheduled by the downlink grant carried by the PDCCH. The PDSCH includes a TA command.

An embodiment of the present disclosure further provides a terminal device. FIG. 2 is a schematic structural diagram of a terminal device according to an embodiment of the present disclosure. As shown in FIG. 2, the terminal device 200 includes an access initiation module 201 and a receiving module 202.

The access initiation module 201 is configured to: in a case of a beam failure, initiate a contention-based random access process triggered for beam failure recovery.

In some examples, beam failure occurs in a PCell or a SCell.

If the beam failure occurs in a SCell, the random access process includes sending a msg3, where the msg3 includes a BFR MAC CE; or the random access process includes sending a msgA, where the msgA includes a BFR MAC CE.

Specifically, the access initiation module 201 may be configured to send a random access message.

The random access message includes any one of the following: a msgl in the 4-step random access process, a msg3 in the 4-step random access process, and a msgA in the 2-step random access process.

The receiving module 202 is configured to receive the downlink response message, and determine that the beam failure recovery is completed.

The downlink response message is a response message corresponding to the random access process.

In the embodiments of the present disclosure, in a case of a beam failure, the terminal device may initiate a contention-based random access process triggered for beam failure recovery. The terminal device receives the downlink response message indicating a response to a random access message, and determines that the BFR is completed, that is, determines that the BFR ends. In this way, completion of the BFR can be determined, thereby avoiding that the UE cannot complete the BFR. This avoids negative impact on signal transmission between the terminal device and a network device, and improves signal transmission between the terminal device and a network device.

In some embodiments, the downlink response message includes a msg4 in the 4-step random access process.

In some examples, the msg4 includes one or more of the following:
a PDCCH scrambled by a C-RNTI, where the PDCCH carries an uplink grant;
a PDCCH scrambled by a C-RNTI, where the PDCCH carries an uplink grant, and the uplink grant indicates a HARQ process number that is the same as a HARQ process number for transmission of a msg3; and
a PDCCH scrambled by a C-RNTI and received in a CSS or a USS. In some examples, the msg4 is received before a contention resolution timer expires.

In some other embodiments, the downlink response message includes a msgB in the 2-step random access process.

In some examples, the msgB includes one or more of the following:
a PDCCH scrambled by a C-RNTI, where the PDCCH carries an uplink grant;
a PDCCH scrambled by a C-RNTI, where the PDCCH carries an uplink grant, and the uplink grant indicates a hybrid automatic repeat request (HARQ) process number that is the same as a HARQ process number for transmission of a msgA;
a PDCCH scrambled by a C-RNTI and a PDSCH scheduled by the PDCCH, where the PDSCH is scheduled by a downlink grant carried by the PDCCH, and the PDSCH includes a timing advance command; and
a PDCCH scrambled by a C-RNTI and received in a CSS or a USS. In some examples, the msgB is received before a msgB timer expires.

It should be noted that in the random access process, if the random access process falls back from a 2-step random access process to a 4-step random access process, the downlink response message includes a msg4 in the 4-step random access process.

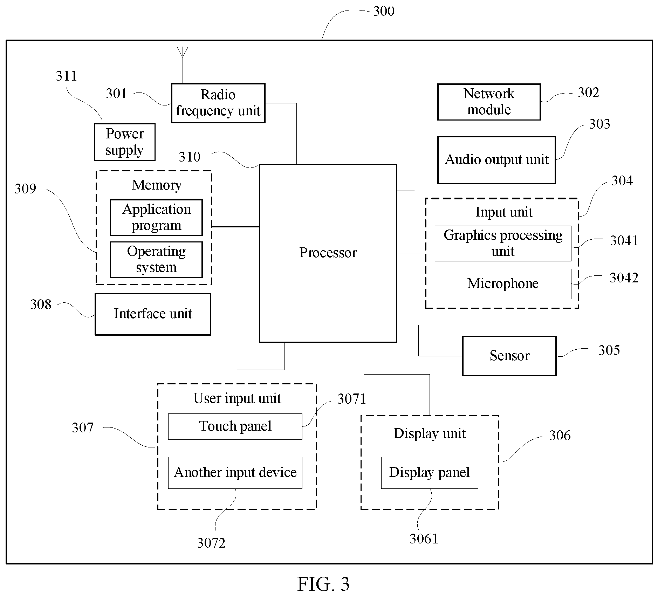

FIG. 3 is a schematic structural diagram of hardware of a terminal device in the embodiments of this disclosure. The terminal device 300 includes but is not limited to: a radio frequency unit 301, a network module 302, an audio output unit 303, an input unit 304, a sensor 305, a display unit 306, a user input unit 307, an interface unit 308, a memory 309, a processor 310, a power supply 311, and other components. It can be understood by a person skilled in the art that, the terminal device structure shown in FIG. 3 does not constitute any limitation on the terminal device, and the terminal device may include more or fewer components than those shown in the figure, or combine some components, or have different component arrangements. In this embodiment of the present disclosure, the terminal device includes but is not limited to a mobile phone, a tablet computer, a notebook computer, a palmtop computer, an in-vehicle terminal, a wearable device, a pedometer, and the like.

The radio frequency unit 301 is configured to: in a case of a beam failure, initiate a contention-based random access process triggered for beam failure recovery; and is configured to receive a downlink response message.

The processor 310 is configured to determine that the beam failure recovery is completed when the radio frequency unit 301 receives the downlink response message.

The downlink response message is a response message corresponding to the random access process.

In the embodiments of the present disclosure, in a case of a beam failure, the terminal device may initiate a contention-based random access process triggered for beam failure recovery. The terminal device receives the downlink response message indicating a response to a random access message, and determines that the BFR is completed, that is, determines that the BFR ends. In this way, completion of the BFR can be determined, thereby avoiding that the UE cannot complete the BFR. This avoids negative impact on signal transmission between the terminal device and a network device, and improves signal transmission between the terminal device and a network device.

It should be understood that, in this embodiment of the present disclosure, the radio frequency unit 301 may be configured to receive and transmit information, or receive and transmit signals during a call. Specifically, the radio frequency unit receives downlink data from a base station, and transmits the downlink data to the processor 310 for processing; and in addition, transmits uplink data to the base station. Generally, the radio frequency unit 301 includes but is not limited to: an antenna, at least one amplifier, a transceiver, a coupler, a low noise amplifier, a duplexer, and the like. In addition, the radio frequency unit 301 may also communicate with a network and other devices through a wireless communication system.

The terminal device provides wireless broadband Internet access for the user by using the network module 302, for example, helping the user to send and receive an e-mail, brows a web page, and access streaming media.

The audio output unit 303 may convert audio data received by the radio frequency unit 301 or the network module 302 or stored in the memory 309 into an audio signal and output the audio signal as a sound. In addition, the audio output unit 303 may further provide audio output (for example, call signal receiving sound or message receiving sound) related to a specific function performed by the terminal device 300. The audio output unit 303 includes a speaker, a buzzer, a telephone receiver, and the like.

The input unit 304 is configured to receive audio or radio frequency signals. The input unit 304 may include a graphics processing unit (Graphics Processing Unit, GPU) 3041 and a microphone 3042. The graphics processing unit 3041 is configured to process image data of a static picture or a video obtained by an image capturing device (for example, a camera) in a video capturing mode or an image capturing mode. A processed image frame may be displayed on the display unit 306. The image frame processed by the graphics processing unit 3041 may be stored in the memory 309 (or another storage medium) or sent by using the radio frequency unit 301 or the network module 302. The microphone 3042 may receive sound and can process such sound into audio data. The audio data obtained through processing may be converted, in a telephone call mode, into a format that may be sent to a mobile communication base station via the radio frequency unit 301 for output.

The terminal device 300 further includes at least one sensor 305, such as an optical sensor, a motion sensor, and other sensors. Specifically, the light sensor includes an ambient light sensor and a proximity sensor. The ambient light sensor may adjust luminance of the display panel 3031 based on brightness of ambient light. The proximity sensor may turn off the display panel 3031 and/or backlight when the terminal device 300 moves to an ear. As a type of the motion sensor, an accelerometer sensor may detect an acceleration value in each direction (generally, three axes), and detect a value and a direction of gravity when the accelerometer sensor is static, and may be used in an application for recognizing a posture of the terminal device (such as screen switching between landscape and portrait modes, a related game, or magnetometer posture calibration), a function related to vibration recognition (such as a pedometer or a knock), and the like. The sensor 305 may further include a fingerprint sensor, a pressure sensor, an iris sensor, a molecular sensor, a gyroscope, a barometer, a hygrometer, a thermometer, an infrared sensor, and the like. Details are not described herein.

The display unit 306 is configured to display information entered by the user or information provided for the user. The display unit 306 may include the display panel 3061, and the display panel 3061 may be configured in a form of a liquid crystal display (Liquid Crystal Display, LCD), an organic light-emitting diode (Organic Light-Emitting Diode, OLED), or the like.

The user input unit 307 may be configured to receive input digit or character information, and generate a key signal input related to a user setting and function control of the terminal device. Specifically, the user input unit 307 includes a touch panel 3071 and another input device 3072. The touch panel 3071, also called a touch screen, may collect touch operation on or near the touch panel by users (for example, operation on the touch panel 3071 or near the touch panel 3071 by fingers or any suitable objects or accessories such as a touch pen by the users). The touch panel 3071 may include two parts: a touch detection apparatus and a touch controller. The touch detection apparatus detects a touch position of the user, detects a signal brought by the touch operation, and transmits the signal to the touch controller. The touch controller receives touch information from the touch detection apparatus, converts the touch information into contact coordinates, sends the contact coordinates to the processor 310, and can receive and execute a command sent by the processor 310. In addition, the touch panel 3071 may be implemented by various types such as a resistive type, a capacitive type, an infrared ray type or a surface acoustic wave type. In addition to the touch panel 3071, the user input unit 307 may further include other input devices 3072. Specifically, the other input devices 3072 may include but are not limited to: a physical keyboard, a function key (such as a volume control key, a switch key), a trackball, a mouse, and a joystick, which is no longer repeated here.

Further, the touch panel 3071 may cover the display panel 3031. When detecting the touch operation on or near the touch panel 3071, the touch panel 3071 transmits the touch operation to the processor 310 to determine a type of a touch event, and then the processor 310 provides corresponding visual output on the display panel 3031 based on the type of the touch event. In FIG. 3, although the touch panel 3071 and the display panel 3031 are used as two independent parts to implement input and output functions of the terminal device, in some embodiments, the touch panel 3071 and the display panel 3031 may be integrated to implement the input and output functions of the terminal device. This is not specifically limited herein.

The interface unit 308 is an interface for connecting an external apparatus with the terminal device 300. For example, the external apparatus may include a wired or wireless headset port, an external power supply (or battery charger) port, a wired or wireless data port, a storage card port, a port configured to connect to an apparatus having an identification module, an audio input/output (I/O) port, a video I/O port, a headset port, and the like. The interface unit 308 may be configured to receive an input (for example, data information or power) from an external apparatus and transmit the received input to one or more elements in the terminal device 300, or transmit data between the terminal device 300 and the external apparatus.

The memory 309 may be configured to store a software program and various data. The memory 309 may mainly include a program storage area and a data storage area. The program storage area may store an operating system, an application required by at least one function (for example, a sound play function or an image display function), and the like. The data storage area may store data (for example, audio data or an address book) or the like created based on use of the mobile phone. In addition, the memory 309 may include a high-speed random access memory or a nonvolatile memory, for example, at least one disk storage device, a flash memory, or other volatile solid-state storage devices.

The processor 310 is a control center of the terminal device, is connected to each part of the entire terminal device by using various interfaces and lines, and performs various functions of the terminal device and data processing by running or executing the software program and/or the module that are/is stored in the memory 309 and invoking data stored in the memory 309, to perform overall monitoring on the terminal device. The processor 310 may include one or more processing units. Optionally, the processor 310 may integrate an application processor and a modem processor. The application processor mainly deals with an operating system, a user interface, an application, and the like. The modem processor mainly deals with wireless communication. It may be understood that the modem processor may not be integrated into the processor 310.

The terminal device 300 may further include the power supply 311 (for example, a battery) configured to supply power to various components. Preferably, the power supply 311 may be logically connected to the processor 310 through a power management system, so as to implement functions such as managing charging, discharging, and power consumption through the power management system.

In addition, the terminal device 300 includes some function modules not shown. Details are not described herein.

Optionally, the embodiment of the present disclosure further provides a terminal device, including a processor 310, a memory 309, and a computer program stored in the memory 309 and capable of running on the processor 310. When the computer program is executed by the processor 310, the processes of the foregoing embodiment of the method for determining beam failure recovery are implemented, and a same technical effect can be achieved. To avoid repetition, details are not described herein again.

An embodiment of the present disclosure further provides a computer-readable storage medium. The computer-readable storage medium stores a computer program, and when executing the computer program, a processor implements the processes of the foregoing embodiments of the method for determining beam failure recovery and a same technical effect can be achieved. To avoid repetition, details are not described herein again. The computer-readable storage medium may include a non-transitory memory, for example, a read-only memory (ROM for short), a random access memory (RAM for short), a magnetic disk, or an optical disc.

The method for determining beam failure recovery, the terminal device, and the storage medium in the foregoing embodiments can be applied to 5G communication systems and subsequent communication systems, which are not limited herein.

The embodiments in this specification are described in a progressive manner, and that the same or similar parts among the embodiments can be referred to each other. Each embodiment focuses on the differences from other embodiments. For related parts of embodiments of the terminal device and embodiments of the computer-readable storage medium, refer to the illustration section of the method embodiments.

It should be noted that in this specification, the terms "comprise", "include" and any other variants thereof are intended to cover non-exclusive inclusion, so that a process, a method, an article, or a device that includes a series of elements not only includes these very elements, but may also include other elements not expressly listed, or also include elements inherent to this process, method, article, or device. An element limited by "includes a ..." does not, without more constraints,
preclude the presence of additional identical elements in the process, method, article, or apparatus that includes the element.

Based on the foregoing descriptions of the embodiments, a person skilled in the art may clearly understand that the method in the foregoing embodiment may be implemented by software in addition to a necessary universal hardware platform or by hardware only. In most circumstances, the former is a preferred implementation manner. Based on such an understanding, the technical solutions of the present disclosure essentially, or the part contributing to the prior art may be implemented in a form of a software product. The computer software product is stored in a storage medium (for example, a ROM/RAM, a magnetic disk, or a compact disc), and includes a plurality of instructions for instructing a terminal (which may be a mobile phone, a computer, a server, an air conditioner, a network device, or the like) to perform the method described in the embodiments of the present disclosure.

All aspects of the present disclosure are described above with reference to a flowchart and/or block diagram of a method, a device (system), and a machine program product according to embodiments of the present disclosure. It should be understood that each block in the flowcharts and/or block diagrams, and a combination of blocks in the flowcharts and/or block diagrams may be implemented by programs or instructions. Those programs or instructions may be provided for a general-purpose computer, a dedicated computer, or a processor of any other programmable data processing device to generate a machine, so that the functions/actions specified in one or more blocks in the flowcharts and/or block diagrams may be implemented via the those programs or instructions executed by the computer or any other programmable data processing device. The processor may be but is not limited to a general purpose processor, a dedicated processor, a special application processor, or a field programmable logic circuit. It should be further understood that each block in the block diagram or the flowchart and a combination of blocks in the block diagram or the flowchart may be implemented by using dedicated hardware that performs a specified function or operation, or may be implemented by using a combination of dedicated hardware and a computer instruction.

The embodiments of the present disclosure are described above with reference to the accompanying drawings, but the present disclosure is not limited to the foregoing specific implementations. The foregoing specific implementations are merely exemplary instead of restrictive. Under enlightenment of the present disclosure, a person of ordinary skills in the art may make many forms without departing from the aims of the present disclosure and the protection scope of claims, all of which fall within the protection of the present disclosure.

## Claims

1. A method for determining beam failure recovery, **characterized in that** the method is applied to a terminal device and comprises:
in a case of a beam failure, initiating a contention-based random access process triggered for beam failure recovery; and
receiving a downlink response message and determining that the beam failure recovery is completed, wherein the downlink response message is a response message corresponding to the random access process.

2. The method according to claim 1, **characterized in that** the beam failure occurs in a secondary cell, and
the random access process comprises sending a message 3 (msg3), wherein the msg3 comprises a beam failure recovery medium access control control element (BFR MAC CE), or
the random access process comprises sending a message A (msgA), wherein the msgA comprises a BFR MAC CE.

3. The method according to claim 1, **characterized in that** the downlink response message comprises a message 4 (msg4) in a 4-step random access process, and the msg4 comprises one or more of the following:
a physical downlink control channel (PDCCH) scrambled by a cell radio network temporary identifier (C-RNTI), wherein the PDCCH carries an uplink grant;
a PDCCH scrambled by a C-RNTI, wherein the PDCCH carries an uplink grant, and the uplink grant indicates a hybrid automatic repeat request (HARQ) process number that is the same as a HARQ process number for transmission of a message 3 (msg3); and
a PDCCH scrambled by a C-RNTI and received in a common search space (CSS) or a user equipment-specific search space (USS).

4. The method according to claim 1, **characterized in that** the downlink response message comprises a message B (msgB) in a 2-step random access process, and the msgB comprises one or more of the following:
a PDCCH scrambled by a C-RNTI, wherein the PDCCH carries an uplink grant;
a PDCCH scrambled by a C-RNTI, wherein the PDCCH carries an uplink grant, and the uplink grant indicates a HARQ process number that is the same as a HARQ process number for transmission of a msgA;
a PDCCH scrambled by a C-RNTI and a PDSCH scheduled by the PDCCH, wherein the PDSCH is scheduled by a downlink grant carried by the PDCCH, and the PDSCH comprises a timing advance command; and
a PDCCH scrambled by a C-RNTI and received in a CSS or a USS.

5. The method according to claim 1, **characterized in that** the method further comprises:
in the random access process, if the random access process falls back from a 2-step random access process to a 4-step random access process, the downlink response message comprises a msg4 in the 4-step random access process.

6. The method according to claim 1, **characterized in that** the beam failure occurs in a primary cell or a secondary cell.

7. A terminal device, **characterized by** comprising:
an access initiation module, configured to: in a case of a beam failure, initiate a contention-based random access process triggered for beam failure recovery; and
a receiving module, configured to receive a downlink response message and determine that the beam failure recovery is completed, wherein the downlink response message is a response message corresponding to the random access process.

8. The terminal device according to claim 7, **characterized in that** the beam failure occurs in a secondary cell; and
the random access process comprises sending a message 3 (msg3), wherein the msg3 comprises a beam failure recovery medium access control control element (BFR MAC CE), or
the random access process comprises sending a message A (msgA), wherein the msgA comprises a BFR MAC CE.

9. The terminal device according to claim 7, **characterized in that** the downlink response message comprises a message 4 (msg4) in a 4-step random access process, and the msg4 comprises one or more of the following:
a physical downlink control channel (PDCCH) scrambled by a cell radio network temporary identifier (C-RNTI), wherein the PDCCH carries an uplink grant;
a PDCCH scrambled by a C-RNTI, wherein the PDCCH carries an uplink grant, and the uplink grant indicates a hybrid automatic repeat request (HARQ) process number that is the same as a HARQ process number for transmission of a message 3 (msg3); and
a PDCCH scrambled by a C-RNTI and received in a common search space (CSS) or a user equipment-specific search space (USS).

10. The terminal device according to claim 7, **characterized in that** the downlink response message comprises a message B (msgB) in a 2-step random access process, and the msgB comprises one or more of the following:
a PDCCH scrambled by a C-RNTI, wherein the PDCCH carries an uplink grant;
a PDCCH scrambled by a C-RNTI, wherein the PDCCH carries an uplink grant, and the uplink grant indicates a HARQ process number that is the same as a HARQ process number for transmission of a message A (msgA); and
a PDCCH scrambled by a C-RNTI and a PDSCH scheduled by the PDCCH, wherein the PDSCH is scheduled by a downlink grant carried by the PDCCH, and the PDSCH comprises a timing advance command; and
a PDCCH scrambled by a C-RNTI and received in a CSS or a USS.

11. The terminal device according to claim 7, **characterized in that**
in the random access process, if the random access process falls back from a 2-step random access process to a 4-step random access process, the downlink response message comprises a msg4 in the 4-step random access process.

12. The terminal device according to claim 7, **characterized in that** the beam failure occurs in a primary cell or a secondary cell.

13. A terminal device, **characterized by** comprising: a processor, a memory, and a computer program stored in the memory and executable on the processor, wherein when the computer program is executed by the processor, steps in the method for determining beam failure recovery according to any one of claims 1 to 6 are implemented.

14. A computer-readable storage medium, **characterized in that** the computer-readable storage medium stores a computer program, and when the computer program is executed by a processor, steps in the method for determining beam failure recovery according to any one of claims 1 to 6 are implemented.
